# EUROPEAN PATENT APPLICATION

(11) **EP 4 664 296 A1**
(43) Date of publication of application: **17.12.2025**
(21) Application number: 25175584.9
(22) Date of filing: 12.05.2025
(51) Int. Cl.: G06F 12/02

(54) **SYSTEMS AND METHODS FOR A MODULAR MEMORY DEVICE**

(30) Priority: 10.06.2024 US 202463658355 P; 15.11.2024 US 202418949763
(71) Applicant: Samsung Electronics Co., Ltd., Suwon-si, Gyeonggi-do 16677 (KR)
(72) Inventor: KI, Yang Seok, San Jose, CA, 95134 (US); JUNG, Myung June, San Jose, CA, 95134 (US)
(74) Representative: Kuhnen & Wacker Patent- und Rechtsanwaltsbüro PartG mbB

(57) **Abstract**

Provided is a system and method for memory pool management, the method including receiving, by a first control circuit of a memory device controller, a first request to create a first logical memory space, the first control circuit being associated with a first memory zone, based on determining that a first memory unit, at a first physical address range of the first memory zone is available, allocating the first memory unit to the first logical memory space, based on determining that a second memory unit of the first memory zone is occupied, sending a memory-donation request to a second control circuit of the memory device controller, the second control circuit being associated with a second memory zone, and based on determining that a third memory unit of the second memory zone is available, allocating the third memory unit to the first logical memory space.

## Description

### FIELD

Aspects of some embodiments of the present disclosure relate to systems and methods for memory pool management in computing systems, and more particularly, to modular memory pool management and architecture.

### BACKGROUND

In the field of computers, a computing system may include one or more hosts and one or more memory devices connected to (e.g., communicatively coupled to) the hosts. Such computing systems have become increasingly popular, in part, for allowing many different users to share the computing resources of the system. Memory requirements have increased over time as the number of users of such systems and the number and complexity of applications running on such systems have increased.

The present background section is intended to provide context only, and the disclosure of any embodiment or concept in this section does not constitute an admission that said embodiment or concept is prior art.

### SUMMARY

Aspects of some embodiments of the present disclosure are directed to computing systems, and may provide improvements to memory pool management and architecture.

According to some embodiments of the present disclosure, there is provided a method for memory pool management, the method including receiving, by a first control circuit of a memory device controller, a first request to create a first logical memory space, the first control circuit being associated with a first memory zone, based on determining, by the first control circuit, that a first memory unit, at a first physical address range of the first memory zone is available, allocating, by the first control circuit, the first memory unit to the first logical memory space, based on determining, by the first control circuit, that a second memory unit of the first memory zone is occupied, sending, by the first control circuit, a memory-donation request to a second control circuit of the memory device controller, the second control circuit being associated with a second memory zone, and based on determining, by the second control circuit, that a third memory unit of the second memory zone is available, allocating, by the second control circuit, the third memory unit to the first logical memory space.

The determining that the first memory unit is available may include reading, by a memory-map manager of the first control circuit, a first memory map associated with the first memory zone, and the determining that the third memory unit is available may include reading, by a memory-map manager of the second control circuit, a second memory map associated with the second memory zone.

The determining that the second memory unit is occupied may include reading, by a memory-map manager of the first control circuit, a first memory map associated with the first memory zone.

The first request to create the first logical memory space may be associated with a performance target.

The method may further include determining, by the first control circuit, that the first memory unit includes a characteristic associated with providing the performance target, and determining, by the second control circuit, that the third memory unit includes the characteristic associated with providing the performance target.

The first memory unit may include a first memory type, and the third memory unit may include a second memory type that is different from the first memory type.

The first control circuit may include a first control core and a second control core, the first request to create the first logical memory space may be processed by the first control core, and a second request to create a second logical memory space may be processed by the second control core.

The allocating of the first memory unit to the first logical memory space may include updating, by a first control core of the first control circuit, a first memory map of the first control circuit with a property of the first memory unit.

The allocating of the third memory unit to the first logical memory space may include updating, by a second control core of the second control circuit, a second memory map of the second control circuit with a property of the third memory unit.

The third memory unit may correspond to a third physical address range that is separated from the first physical address range.

The method may further including receiving, by the first control circuit, a read request for a data location associated with the first logical memory space, determining, by the first control circuit, that the data location is located outside of the first memory zone, forwarding, by the first control circuit, the read request to the second control circuit, and reading, by a memory controller of the second control circuit, data associated with the read request from the second memory zone.

The method may further include receiving, by the first control circuit, a write request for a data location associated with the first logical memory space, determining, by the first control circuit, that the data location is located outside of the first memory zone, forwarding, by the first control circuit, the write request to the second control circuit, and writing, by a memory controller of the second control circuit, data associated with the write request to the second memory zone.

According to some other embodiments of the present disclosure, there is provided a system including a memory device controller including a first control circuit and a second control circuit, a first memory zone including a first memory unit associated with the first control circuit and a second memory unit associated with the first control circuit, and a second memory zone including a third memory unit associated with the second control circuit.

The third memory unit may correspond to a third physical address range that is separated from a first physical address range corresponding to the first memory unit.

The first memory unit may include a first memory type, and the third memory unit may include a second memory type that is different from the first memory type.

The first control circuit may include a first crossbar circuit connecting a first control core of the first control circuit to a first memory controller associated with accessing the first memory unit, and a second memory controller associated with accessing the second memory unit, and the second control circuit may include a second crossbar circuit connecting a third control core of the second control circuit to a third memory controller associated with accessing the third memory unit.

The memory device controller may be configured to perform receiving, at the first control circuit, a first request to create a first logical memory space, based on determining, by the first control circuit, that the first memory unit is available, allocating, by the first control circuit, the first memory unit to the first logical memory space, based on determining, by the first control circuit, that the second memory unit is occupied, sending, by the first control circuit, a memory-donation request to the second control circuit, and based on determining, by the second control circuit, that the third memory unit is available, allocating, by the second control circuit, the third memory unit to the first logical memory space.

The determining that the first memory unit is available may include reading, with a memory-map manager of the first control circuit, a first memory map associated with the first memory zone, and the determining that the third memory unit is available may include reading, with a memory-map manager of the second control circuit, a second memory map associated with the second memory zone.

The first control circuit may include a first control core and a second control core, the first request to create the first logical memory space may be processed by the first control core, and a second request to create a second logical memory space may be processed by the second control core.

According to some other embodiments of the present disclosure, there is provided a device including a processing circuit associated with a first control circuit and a second control circuit, and a computer-readable medium storing instructions. Based on being executed by the processing circuit, the instructions may cause the processing circuit to perform receiving, with a first control circuit associated with a first memory zone, a request to create a first logical memory space, based on determining that a first memory unit, at a first physical address range of the first memory zone is available, allocating the first memory unit to the first logical memory space, based on determining that a second memory unit of the first memory zone is occupied, sending a memory-donation request from the first control circuit to a second control circuit associated with a second memory zone, and based on determining that a third memory unit of the second memory zone is available, allocating the third memory unit to the first logical memory space. The third memory unit may correspond to a third physical address range that is separated from the first physical address range.

### BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.
FIG. 1 is a block diagram depicting a system for memory-pool management, according to some embodiments of the present disclosure.
FIG. 2 is a block diagram depicting components of a memory device controller of the system for memory pool management, according to some embodiments of the present disclosure.
FIGS. 3A-3G (collectively, FIG. 3) are diagrams depicting methods for organizing memory, according to some embodiments of the present disclosure.

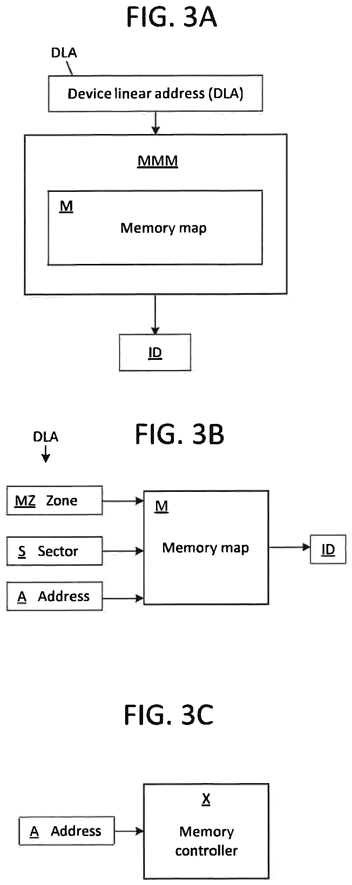

FIG. 3A is a block diagram depicting a memory management module, according to some embodiments of the present disclosure.
FIG. 3B is a block diagram depicting a method of generating a memory-space identifier, according to some embodiments of the present disclosure.
FIG. 3C is a block diagram depicting a method of utilizing a memory controller, according to some embodiments of the present disclosure.

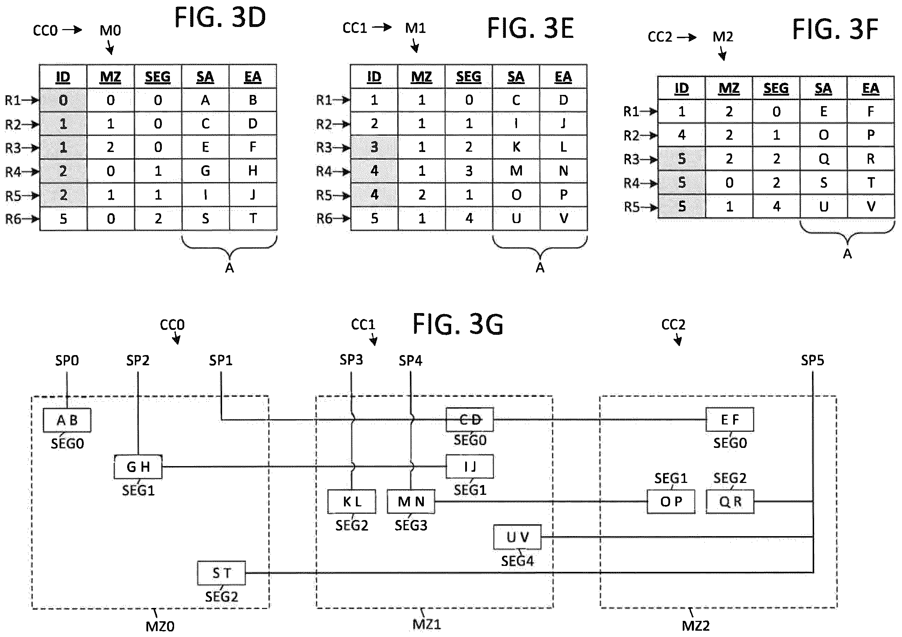

FIG. 3D is a diagram depicting a zeroth memory map, which may correspond to a zeroth memory zone, according to some embodiments of the present disclosure.
FIG. 3E is a diagram depicting a first memory map, which may correspond to a first memory zone, according to some embodiments of the present disclosure.
FIG. 3F is a diagram depicting a second memory map, which may correspond to a second memory zone, according to some embodiments of the present disclosure.
FIG. 3G is a diagram depicting relationships between memory segments, memory spaces, and memory zones associated with the maps of FIGS. 3D, 3E, and 3F, according to some embodiments of the present disclosure.

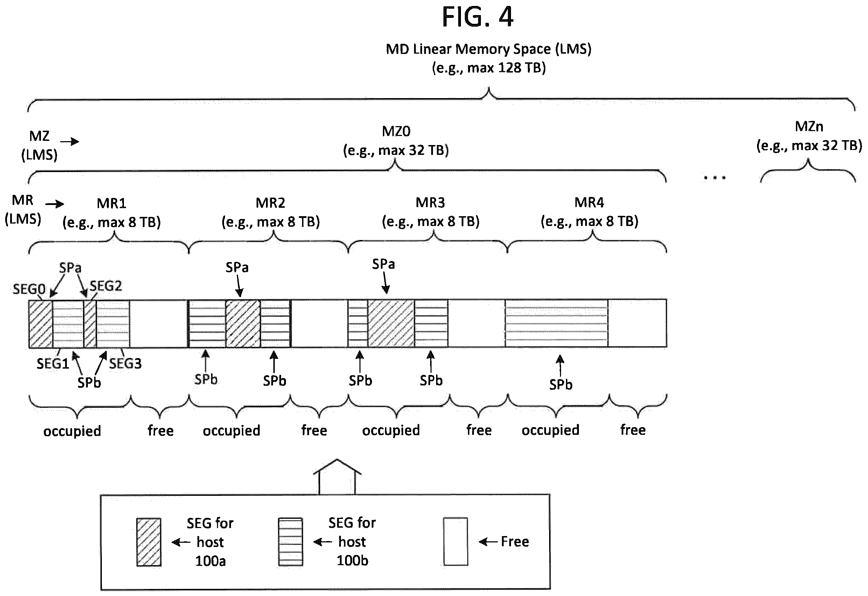

FIG. 4 is a diagram depicting a scattered linear memory space associated with contiguous memory regions, according to some embodiments of the present disclosure.

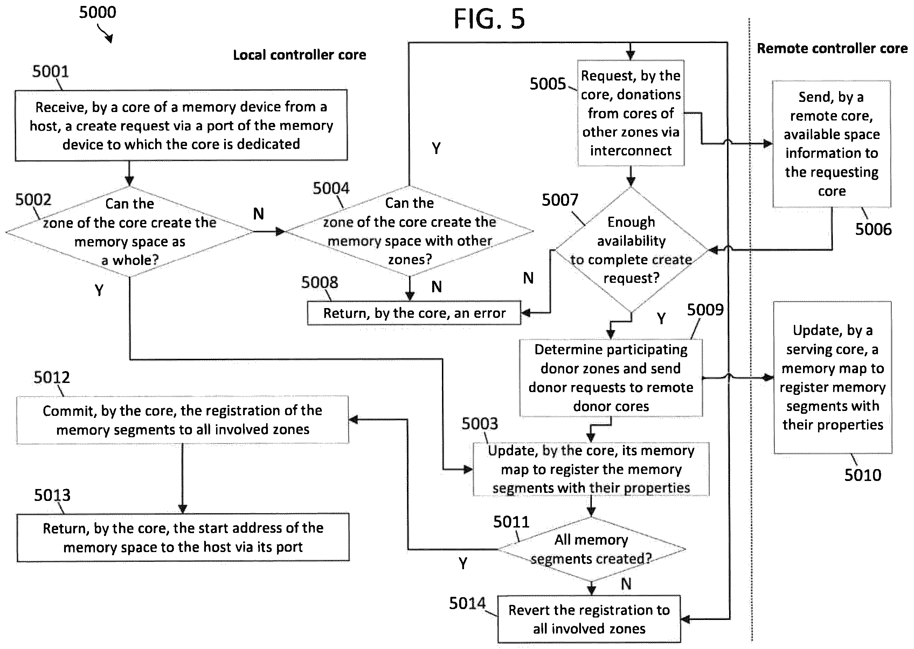

FIG. 5 is a flowchart depicting operations of a method for creating a logical memory space, according to some embodiments of the present disclosure.

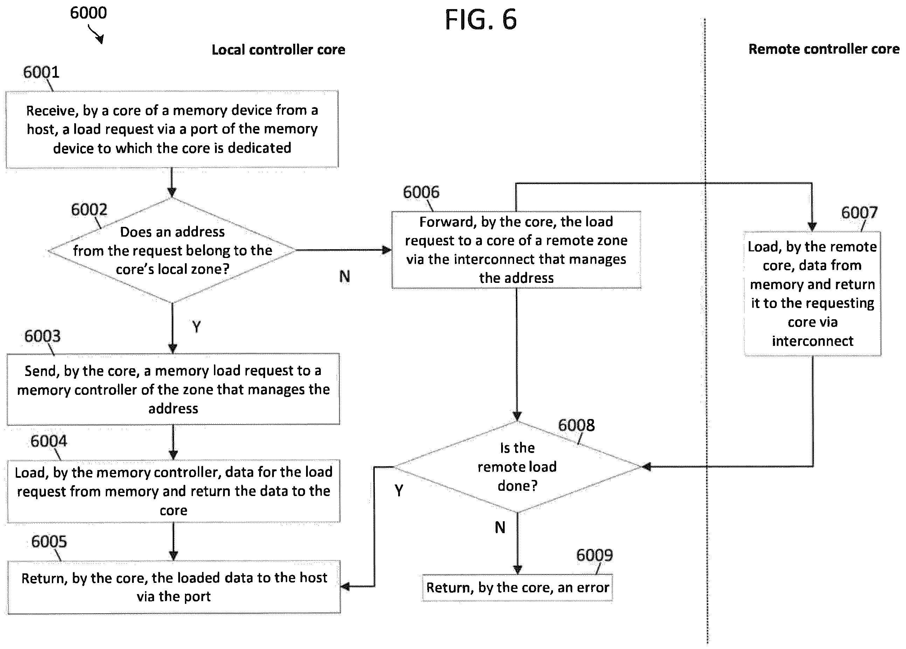

FIG. 6 is a flowchart depicting operations of a method for performing a load request, according to some embodiments of the present disclosure.

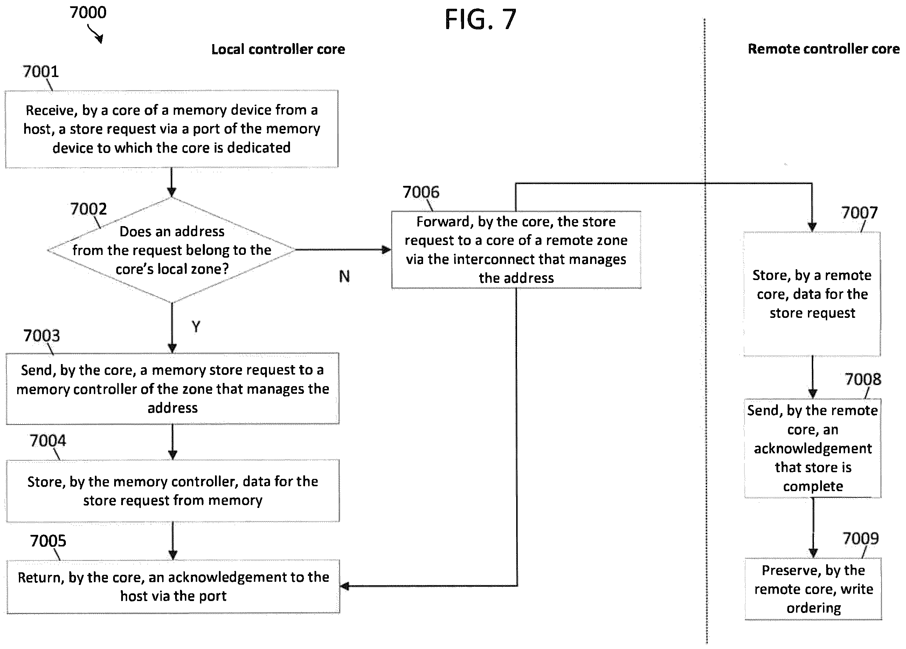

FIG. 7 is a flowchart depicting operations of a method for performing a store request, according to some embodiments of the present disclosure.

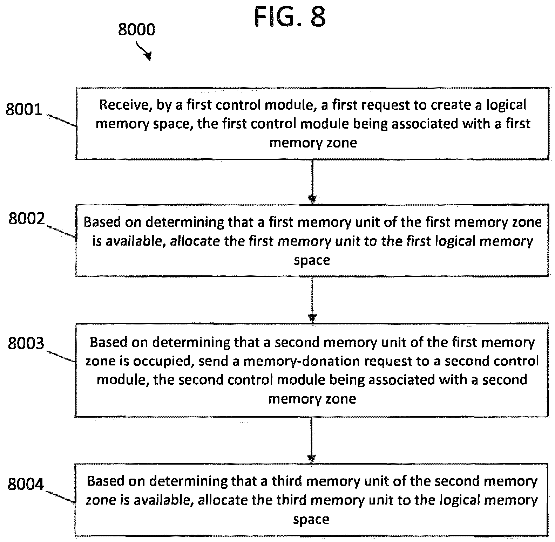

FIG. 8 is a flowchart depicting operations of a method for memory pool management, according to some embodiments of the present disclosure.

Corresponding reference characters indicate corresponding components throughout the several views of the drawings. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

### DETAILED DESCRIPTION

Aspects of the present disclosure and methods of accomplishing the same may be understood more readily by reference to the detailed description of one or more embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey aspects of the present disclosure to those skilled in the art. Accordingly, description of processes, elements, and techniques that are not necessary to those having ordinary skill in the art for a complete understanding of the aspects and features of the present disclosure may be omitted.

Unless otherwise noted, like reference numerals, characters, or combinations thereof denote like elements throughout the attached drawings and the written description, and thus, descriptions thereof will not be repeated. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

In the detailed description, for the purposes of explanation, numerous specific details are set forth to provide a thorough understanding of various embodiments. It is apparent, however, that various embodiments may be practiced without these specific details or with one or more equivalent arrangements.

It will be understood that, although the terms "zeroth," "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or component is referred to as being "on," "connected to," or "coupled to" another element or component, it can be directly on, connected to, or coupled to the other element or component, or one or more intervening elements or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or component is referred to as being "between" two elements or components, it can be the only element or component between the two elements or components, or one or more intervening elements or components may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, each of the terms "or" and "and/or" includes any and all combinations of one or more of the associated listed items. For example, the expression "A and/or B" denotes A, B, or A and B.

For the purposes of this disclosure, expressions such as "at least one of," when preceding a list of elements, modify the entire list of elements and do not modify the individual elements of the list. For example, "at least one of X, Y, or Z," "at least one of X, Y, and Z," and "at least one selected from the group consisting of X, Y, and Z" may be construed as X only, Y only, Z only, or any combination of two or more of X, Y, and Z, such as, for instance, XYZ, XYY, YZ, and ZZ.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

Any of the components or any combination of the components described (e.g., in any system diagrams included herein) may be used to perform one or more of the operations of any flow chart included herein. Further, (i) the operations are merely examples, and may involve various additional operations not explicitly covered, and (ii) the temporal order of the operations may be varied.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Any of the functionalities described herein, including any of the functionalities that may be implemented with a host, a device, and/or the like or a combination thereof, may be implemented with hardware, software, firmware, or any combination thereof including, for example, hardware and/or software combinational logic, sequential logic, timers, counters, registers, state machines, volatile memories such as dynamic RAM (DRAM) and/or static RAM (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application-specific ICs (ASICs), central processing units (CPUs) including complex instruction set computer (CISC) processors and/or reduced instruction set computer (RISC) processors, graphics processing units (GPUs), neural processing units (NPUs), tensor processing units (TPUs), data processing units (DPUs), and/or the like, executing instructions stored in any type of memory. In some embodiments, one or more components may be implemented as a system-on-a- chip (SoC).

Any of the computational devices disclosed herein may be implemented in any form factor, such as 3.5 inch, 2.5 inch, 1.8 inch, M.2, Enterprise and Data Center Standard Form Factor (EDSFF), NF1, and/or the like, using any connector configuration such as Serial Advanced Technology Attachment (SATA), Small Computer System Interface (SCSI), Serial Attached SCSI (SAS), U.2, and/or the like. Any of the computational devices disclosed herein may be implemented entirely or partially with, and/or used in connection with, a server chassis, server rack, data room, data center, edge data center, mobile edge data center, and/or any combinations thereof.

Any of the devices disclosed herein that may be implemented as storage devices may be implemented with any type of nonvolatile storage media based on solid-state media, magnetic media, optical media, and/or the like. For example, in some embodiments, a storage device (e.g., a computational storage device) may be implemented as an SSD based on not-AND (NAND) flash memory, persistent memory such as cross-gridded nonvolatile memory, memory with bulk resistance change, PCM, and/or the like, or any combination thereof.

Any of the communication connections and/or communication interfaces disclosed herein may be implemented with one or more interconnects, one or more networks, a network of networks (e.g., the Internet), and/or the like, or a combination thereof, using any type of interface and/or protocol. Examples include Peripheral Component Interconnect Express (PCIe), non-volatile memory express (NVMe), NVMe-over-fabric (NVMe-oF), Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, SATA, SCSI, SAS, Internet Wide Area RDMA Protocol (iWARP), and/or a coherent protocol, such as Compute Express Link (CXL), CXL.mem, CXL.cache, CXL.IO and/or the like, Gen-Z, Open Coherent Accelerator Processor Interface (OpenCAPI), Cache Coherent Interconnect for Accelerators (CCIX), and/or the like, Advanced eXtensible Interface (AXI), any generation of wireless network including 2G, 3G, 4G, 5G, 6G, and/or the like, any generation of Wi-Fi, Bluetooth, near-field communication (NFC), and/or the like, or any combination thereof.

In some embodiments, a software stack may include a communication layer that may implement one or more communication interfaces, protocols, and/or the like such as PCIe, NVMe, CXL, Ethernet, NVMe-oF, TCP/IP, and/or the like, to enable a host and/or an application running on the host to communicate with a computational device or a storage device.

Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As mentioned above, in the field of computers, a computing system may include one or more hosts and one or more memory devices connected to (e.g., communicatively coupled to) the hosts. The memory devices may be located on the host or may be located remotely from the host. The memory devices may be used by applications running on the host. One or more of the hosts may create memory spaces used by one or more of the applications. Different hosts may use memory differently. For example, some hosts may request a specific capacity, a specific performance, a specific reliability, and/or a specific availability.

Aspects of some embodiments of the present disclosure provide improvements to memory pool management through a modular cooperative-memory architecture and corresponding mapping (e.g., memory allocation) schemes.

Memory pooling solutions may be incorporated into datacenter architectures. Aspects of embodiments of the present disclosure may provide for datacenter architectures that overcome latency problems of some memory-pooling systems.

Aspects of some embodiments of the present disclosure provide for a memory device having a very large memory capacity, high aggregate bandwidth, and/or dynamic memory provisioning. A memory device, according to some embodiments of the present disclosure, may overcome some of the performance challenges of some memory box solutions by providing a very short latency to satisfy some CPU latency specifications (e.g., having latencies between 150 nanoseconds (ns) and 200 ns).

In some embodiments, a system for memory-pool management may include a switchless memory box architecture.

In some embodiments, a system for memory-pool management may include an improved memory controller architecture.

Aspects of some embodiments of the present disclosure provide for a scalable architecture that can support hundreds of terabytes (TB) of memory capacity and that has a low latency (e.g., under 200 ns), which a CPU (e.g., a conventional CPU) can handle.

Aspects of some embodiments of the present disclosure provide for a memory device having a large memory pool with increased capacity, greater bandwidth, and improved reliability, availability, and serviceability (RAS). The memory device may also support a variety of memory types and interfaces. Aspects of some embodiments of the present disclosure provide a method for managing the memory pool and presenting the memory pool to hosts.

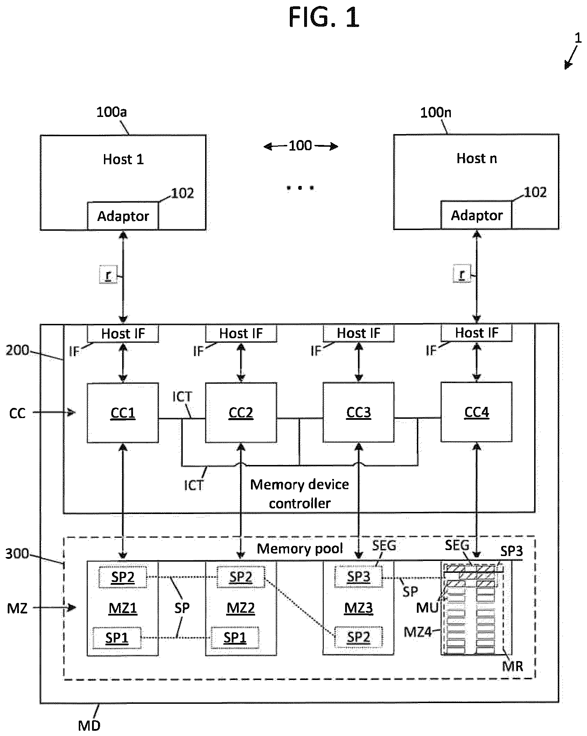

FIG. 1 is a block diagram depicting a system for memory-pool management, according to some embodiments of the present disclosure.

Referring to FIG. 1, a system 1 may include a memory device MD, which may be accessed by multiple hosts 100 (e.g., a first host 100a through an n-th host 100n). In some embodiments, the hosts 100 may access the memory device MD through adaptors 102 (e.g., host adapters). In some embodiments, the adaptors 102 may support a coherent memory protocol, such as CXL, CCIX, and/or the like. For example, the adapters 102 may support any suitable interconnect technology having cache coherence management features. In some embodiments, the adaptors 102 may support a non-coherent memory protocol, such as double data rate (DDR), low-power double data rate (LPDDR), and/or the like. The adaptors 102 may have some latency associated therewith (e.g., 10 nanoseconds (ns) to 20 ns per adaptor 102). In some embodiments, the hosts 100 may access the memory device MD through a cache-coherent protocol (e.g., CXL 2.0). If an adaptor 102 has a compute express link (CXL) multiple logical device (MLD) capability, or if the host 100 has multiple adaptors 102, the host 100 may create multiple logical memory spaces SP (e.g., logical memory devices) from the memory device MD. In some embodiments, an operating system (OS) of a given host 100 may perceive each memory space SP (e.g., each logical device) as a separate nonuniform memory access (NUMA) node. In some embodiments, a process of a given host 100 (e.g., an application on the host 100) may create memory objects from a single logical device or from across multiple logical devices. In response to a request r from a given host 100, the memory device MD may create (e.g., may dynamically create) a given memory space SP with user-specified capacity, performance, and/or reliability based on the following architecture.

As discussed in further detail below, the memory device MD may include a memory device controller 200 having a modular-cooperative architecture. In some embodiments, the memory device controller 200 may serve at a chassis level. For example, the memory device controller 200 may provide one or more hosts 100 with access to one or more memory zones MZ across memory components (e.g., across memory circuits) within a chassis. In some embodiments, the memory device controller 200 may serve at a component level. For example, the memory device controller 200 may provide one or more hosts 100 with access to one or more memory zones MZ across memory locations (e.g., across memory regions MR within a memory component (e.g., within a memory circuit)). That is, the modular-cooperative architecture may allow for flexibility in allocating (e.g., in assigning) memory units MU to memory spaces SP at a variety of levels, including at the chassis level and at the component level.

As used herein, a "memory region" MR refers to an address space (e.g., a linear address space) of a memory controller within a memory zone MZ. For example, a given memory zone MZ may include one or more memory regions (e.g., one or more linear address spaces), which are managed by the memory controller of the given memory zone MZ. As used herein, a "memory unit" MU refers to a logically allocatable portion of a memory region MR. A memory unit MU may include a variety of sizes and/or types. For example, a memory unit MU may refer to an LBA, a 1kB (kilobyte) page, a 2kB page, a 4kB page, a huge page, a block, a die, a chip (e.g., a memory chip), and/or the like. The size of a memory unit MU may be configured by software. As used herein, a "memory segment" SEG refers to a chunk of memory allocated for a logical device from a given memory region MR. For example, a given memory segment SEG may include one or more portions of a given memory unit and/or one or more given memory units MU (e.g., logical memory units), within a given memory zone MZ, that are allocated (e.g., assigned) to a given memory space SP. For example, a third memory space SP3 may include memory segments SEG within a third memory zone MZ3 and within a fourth memory zone MZ4. The fourth memory zone MZ4 may include a memory region MR. The memory region MR may include one or more memory units MU. The memory segment SEG of the fourth memory zone MZ4 may include one or more of the memory units MU of the memory region MR of the fourth memory zone MZ4. A first memory zone MZ1, a second memory zone MZ2, and the third memory zone MZ3 may similarly include one or more memory regions MR, one or more memory units MU, and one or more memory segments SEG associated with one or more memory spaces SP (e.g., a first memory space SP1, a second memory space SP2, and the third memory space SP3).

The memory device controller 200 may include a plurality of control circuits CC (e.g., control modules). For example, the memory device controller 200 may include a first control circuit CC1 through a fourth control circuit CC4. The control circuits CC may be the smallest units of configuration for the memory device MD. Each control circuit CC may be associated with managing a corresponding memory zone MZ (e.g., MZ1 to MZ4) of a memory pool 300. Each control circuit CC may be connected to one or more hosts 100 through a host interface IF (e.g., the host interface IF may include one or more ports). In some embodiments, the host interface IF may include CXL ports. However, the present disclosure is not limited thereto. For example, the host interface IF may include any suitable port known to one of ordinary skill in the art. Each control circuit CC may be connected to one or more of the other control circuits CC of the memory device controller 200 via an interconnect ICT. In some embodiments, the interconnect ICT may be a non-coherent interconnect, such as an advanced extensible interface (AXI) interconnect or an advanced RISC machine (ARM) on-chip interconnect and/or the like. In some embodiments, the interconnect ICT may include a coherent interconnect, such as an ARM coherent mesh network (CMN)-700 and/or the like. In some embodiments, the interconnect ICT may include one or more of PCIe, universal chiplet interconnect express (UCIe), Marvell MoChi, and/or the like. In some embodiments, the interconnect ICT may be a non-coherent interconnect that interfaces with a network (e.g., an external network connected to the host interface IF) that is capable of providing coherency information (e.g., via a coherent protocol, such as CXL). In some embodiments, the coherency information may not be utilized (e.g., may be ignored) by the system 1.

Each control circuit CC combined with a corresponding memory zone MZ may provide for the modularity of the memory device MD. The modular aspect of the memory device MD enables scalability and heterogeneity by allowing for the addition of control circuits CC associated with memory zones MZ having capabilities that are similar to or different from other memory zones MZ. For example, one or more the memory zones MZ (e.g., MZ1 through MZ4) may have similar or different capabilities, such as capacity, speed, architecture, and/or the like. The mapping and routing scheme provided by the plurality of control circuits CC, which is discussed in further detail below, enables cooperative memory pooling for flexibility in creating memory spaces SP.

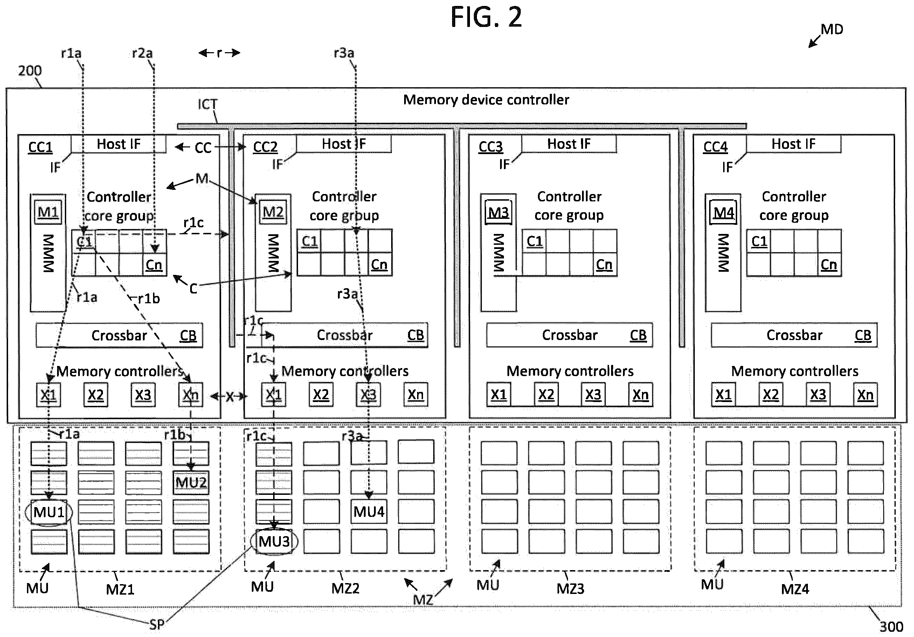

FIG. 2 is a block diagram depicting components of a memory device controller 200 of the system for memory-pool management, according to some embodiments of the present disclosure.

Referring to FIG. 2, the memory device MD may include the memory device controller 200 and a memory pool 300. The memory device controller 200 may include a group of control circuits CC connected to each other by the interconnect ICT (e.g., an on-chip interconnect). In some embodiments, the control circuits CC may be the smallest unit of configuration for the memory device controller 200. The number of control circuits CC may vary, depending on a target memory capacity and/or a target performance. A control circuit CC may include a processor core cluster (e.g., a controller core group of controller cores C), ports (e.g., ports of a host interface IF), memory controllers X, and a memory management module MMM including a memory map M (e.g., a memory-map table managed by the memory management module MMM). The controller cores C (e.g., C1 to Cn) (also referred to as control cores) of a given controller core cluster may share memory controllers X (e.g., X1 to Xn) in the corresponding control circuit CC. Each memory controller X may manage a portion of memory in a given memory zone MZ. In some embodiments, all the controller cores C in a given control circuit CC can access any memory controllers X of their corresponding control circuit CC via a crossbar CB with the same overhead. For example, the crossbar CB may be a switch (e.g., a lightweight and optimized switch) with very low latencies that provides each controller core C of a given control circuit CC with access (e.g., equal access) to each of the memory controllers X. A given controller core C may respond to a given host 100 via a port of the host interface IF to which the controller core C is dedicated. The number of controller cores C in a core cluster, the number of ports, and the number of memory controllers X in a control circuit CC may vary and is not limited, by the present disclosure, to the numbers depicted in FIG. 2.

As discussed in further detail below, with reference to FIGS. 5, 6, and 7, the memory device controller 200 may handle various requests from the hosts 100 connected to corresponding one or more of the host interfaces IF. FIG. 5 depicts operations for creating a logical memory space SP; FIG. 6 depicts operations for performing a load request; and FIG. 7 depicts operations for performing a store request. For example, a first host 100 may send a create request r1a, to create a memory space SP, to a first control circuit CC1. Any suitable controller core C of the first control circuit CC1 may handle the create request r1a. For example, the first controller core C1 may handle the create request r1a. The first controller core C1 may determine that a first memory unit MU1 of the first memory zone MZ1 is available (e.g., not occupied by other memory spaces SP).

The first controller core C1 may check (e.g., determine whether memory units MU are available in) the first memory zone MZ1 before checking neighboring memory zones MZ because the first memory zone MZ1 is the local zone (also referred to as a home zone) of the create request r1a. For example, the home zone may provide the shortest path and, thereby, the shortest latency between a given host 100 and its memory space SP, such that it may be suitable for the given host 100 to utilize memory units MU from the home zone before utilizing memory units from neighboring memory zones MZ. The first control circuit CC1 may allocate the first memory unit MU1 to the memory space SP. For example, the first control circuit CC1 may allocate the first memory unit MU1 as a portion of (e.g., as a memory segment SEG) of the memory space SP. The first memory unit MU1 may be located at a physical address within a range (e.g., a contiguous range) of physical addresses of the first memory zone MZ1. In determining whether the first memory unit MU1 is available, the first controller core C1 may check a first memory map M1 of the first control circuit CC1.

In some embodiments, memory units MU may be allocated to a given memory space SP to satisfy a performance target. The performance target may be associated with (e.g., may be indicated by) the create request r1a. For example, the performance target may include (e.g., may indicate) a latency-related characteristic (e.g., a minimum latency) and the first memory unit MU1 may be selected from the first memory zone MZ1 for allocating to the memory space SP based on the first memory unit MU1 being able to contribute to meeting the performance target. For example, the first memory unit MU1 may contribute to (e.g., may provide) a lower latency because the first memory unit MU1 may be physically closer to the first control circuit CC1 and/or because the first memory unit MU1 may include (e.g., may be) a type of physical memory that is a relatively fast type of memory.

The first memory unit MU1 alone may not be sufficient to satisfy the create request r1a. The first controller core C1 may determine that the first memory zone MZ1 does not have enough available memory to satisfy the create request r1a. For example, the first controller core C1 may determine that a second memory unit MU2 is occupied (e.g., is not available) (see r1b). The first controller core C1 may determine that the second memory unit MU2 is occupied based on checking the first memory map M1. The first controller core C1 may send a donation request r1c (e.g. a memory-donation request) to one or more neighboring control circuits CC to find additional memory units MU to satisfy the create request r1a. For example, a first controller core C1 of a second control circuit CC2 may handle the donation request r1c and may determine that a third memory unit MU3 is available. The second control circuit CC2 may allocate the third memory unit MU3 to the memory space SP. For example, the second control circuit CC2 may allocate the third memory unit MU3 as a portion (e.g., a memory segment SEG) of the memory space SP. Based on using the memory management module MMM, each controller group of controller cores C may know how much memory is available in its corresponding memory zone MZ to donate memory and cooperate with other control circuits CC to fulfil memory requests.

The third memory unit MU3 may be located at a physical address within a range (e.g., a contiguous range) of physical addresses of the second memory zone MZ2. Because the first memory unit MU1 and the third memory unit MU3 are in different memory zones MZ, they may be non-contiguous with each other. For example, the third memory unit MU3 may be located at a physical address range (e.g., a given memory region MR) that is separated from a physical address range (e.g., a given memory region MR) of the first memory unit MU1. The memory units MU within each memory zone MZ may be contiguous while being non-contiguous with memory units MU of neighboring memory zones MZ (e.g., disjoined with, discontinuous with, and/or spaced apart from). In some embodiments, two or more memory zones MZ may have different types of memory units from each other. For example, two or more memory zones MZ may have different interface types, different latencies, and/or other different characteristics from each other. As such, the memory device MD may enable heterogenous memory spaces SP, even though each memory zone MZ may include homogeneous memory units MU within the same memory zone MZ. As such, the memory device MD may allow for flexibility in allocating memory spaces SP to meet performance targets. For example, each controller group of controller cores C may have knowledge about the characteristics of its local memory zone MZ and can cooperate with other control circuits CC to provide heterogeneous memory. In some embodiments, control circuits CC may determine whether a corresponding memory unit MU includes one or more characteristics (e.g., performance characteristics) associated with meeting a performance target. For example, the performance characteristics may include one or more of latency (e.g., average latency, minimum latency, maximum latency, latency quality of service (QoS), and/or the like), throughput (e.g., input/output (IO) operations per second, tokens per second, and/or the like), bandwidth (e.g., gigabytes per second (GB/s)), and/or the like.

For example, and still referring to FIG. 2, in some embodiments, the memory pool 300 may include multiple memory zones MZ. Each memory zone MZ may be organized independently in terms of form factor, interface, topology, etc., while memory within a memory zone MZ may be homogeneous in terms of form factor and interface. For example, a memory zone MZ may accommodate various types of RAM and video RAM (VRAM), such as graphics double data rate (GDDR) or high-bandwidth memory (HBM). Additionally, a memory zone MZ may support internal memory interfaces such as DDR, Synchronous DRAM (SDRAM), Rambus DRAM (RDRAM), GDDR, HBM, CXL, and others. Accordingly, the memory device MD may have a mixture of different memory types and interfaces. In some embodiments, a given memory zone MZ may include non-volatile random-access memory technologies, such as ferroelectric RAM (FeRAM), magnetoresistive RAM (MRAM), and/or the like.

In some embodiments, the memory device MD may have a memory zone MZ based on 4-channel DDR5 SDRAM, a memory zone MZ based on 8-channel DDR4 SDRAM, a memory zone MZ based on twelve GDDR chips, and a memory zone MZ based on six HBM chips. To handle such a variety of memory types, the corresponding control circuit CC may have specific memory controllers X for associated memory types and interfaces.

Each controller core C may serve different requests from the hosts 100 (see FIG. 1). For example, the n-th controller core Cn may serve a second request (e.g., r2a) from a second host 100 while the first controller core C1 serves a first request (e.g., the create request r1a) from the first host 100. Additionally, a controller core C of the second control circuit CC2 may serve a third request (e.g., r3a) from a third host 100 while the first controller core C1 and the n-th controller core Cn respectively serve the first request (e.g., r1a) and second request (e.g., r2a).

FIGS. 3A-3G (collectively, FIG. 3) are diagrams depicting methods for organizing memory, according to some embodiments of the present disclosure.

Each memory map M may maintain memory-space information (e.g., logical-device information) that a corresponding control circuit CC (see FIG. 2) manages. As discussed above, a memory space SP can be created within its local memory zone MZ or across local and remote memory zones MZ. The memory device MD may present a single linear address space (e.g., a single logical address space) by default (see FIG. 4). If multiple memory spaces SP are created, each memory space SP may create a single contiguous linear address space (e.g., a logically contiguous linear address space) from the default address space. For example, the default address space may correspond to a linear memory space (LMS) of the memory device MD (see FIG. 4). The memory maps M may be used by corresponding control circuits CC to locate and keep track of (e.g., to manage) memory segments SEG throughout the memory device MD.

When a given host 100 creates a memory object (e.g., a memory space and/or associated data), the control circuit CC for the given host 100 may register the memory object to the memory map M of the control circuit CC, along with capacity, performance, and RAS information. When the host 100 requests a read or write operation associated with a memory address, a controller core C of the control circuit CC may test the request against the memory map M to determine whether the host 100 is allowed to access the memory address. If it is confirmed that the host 100 can access the memory address, the controller core C may pass the request to a memory controller X of the target memory zone MZ.

FIG. 3A is a block diagram depicting a memory management module MMM, according to some embodiments of the present disclosure.

Referring to FIG. 3A, each memory management module MMM of the memory device controller 200 may manage a memory map M (e.g., a memory map table) of a corresponding control circuit CC (see FIG. 2). In some embodiments, based on receiving a create request, a given memory management module MMM may receive device linear addresses DLA, from a corresponding control circuit CC and/or neighboring control circuits CC, associated with memory segments SEG that the control circuits CC have allocated to the memory space SP for the create request (e.g., r1a). Based on the received device linear addresses DLA, the memory management module MMM may record address information A (see FIGS. 3D to 3F) in the memory map M (e.g., in a corresponding one of M0 to M2) and may generate a memory-space identifier ID (e.g., a logical memory device ID) based on the received device linear addresses DLA.

FIG. 3B is a block diagram depicting a method of generating a memory-space identifier ID, according to some embodiments of the present disclosure.

Referring to FIG. 3B, in some embodiments, the device linear addresses DLA provided to the memory management module MMM may include (or may be used to determine) a memory zone MZ, a sector S, and the address information A. In some embodiments, the address information A may include a starting address SA and/or an ending address EA associated with a given memory segment SEG from a corresponding memory zone MZ. A memory segment SEG may correspond to addresses (e.g., physical addresses) within a given memory zone MZ. For example, in some embodiments, if a start address SA corresponds to a memory address zero and the memory segment SEG has a length of 4kB (e.g., a 4k page), then the ending address EA may be 4k. The memory-space identifier ID may be any suitable identifier assigned to one or more memory segments SEG to indicate that the memory segments SEG are associated with the same memory space SP. For example, the memory-space identifier ID may be a number that is incremented from a previously created memory space SP. For example, a previously created memory space SP may have an ID of 4 and a more recently created memory space SP may have an ID of 5.

FIG. 3C is a block diagram depicting a method of utilizing a memory controller X, according to some embodiments of the present disclosure.

Referring to FIG. 3C, in some embodiments, the address information A may be provided to a corresponding memory controller X (e.g., X1 to Xn) to access a corresponding memory unit MU (see FIG. 2). In some embodiments, a controller core C may determine which memory controller X manages an address of a given memory zone MZ associated with the address information A. For example, the controller core C may refer to a memory map M in a control circuit CC associated with the memory zone MZ.

FIG. 3D is a diagram depicting a zeroth memory map M0, which may correspond to a zeroth memory zone MZ0, according to some embodiments of the present disclosure.

FIG. 3E is a diagram depicting a first memory map M1, which may correspond to a first memory zone MZ1, according to some embodiments of the present disclosure.

FIG. 3F is a diagram depicting a second memory map M2, which may correspond to a second memory zone MZ2, according to some embodiments of the present disclosure.

FIG. 3G is a diagram depicting relationships between memory segments SEG, memory spaces SP, and memory zones MZ associated with the maps of FIGS. 3D, 3E, and 3F, according to some embodiments of the present disclosure.

Referring to FIG. 3D, a given memory map M (e.g., M0) may include information for locating memory segments SEG associated with one or more memory spaces SP. For example, each memory map M may include memory-space identifiers ID (e.g., logical memory device IDs) (corresponding to specific memory spaces SP), information indicating a corresponding memory zone MZ (e.g., a memory zone ID), information indicating a corresponding memory segment SEG of the memory zone MZ, and corresponding address information A (e.g., a starting address SA and an ending address EA). In some embodiments, each memory map M may include information related to determining performance characteristics (e.g., latency information and the like) associated with a given memory space SP.

Each memory map M may indicate for which memory-space identifiers ID the corresponding control circuit CC is serving as a local (or home) control circuit CC (e.g., a local or home control module). For example, a given control circuit CC may serve as a home control circuit CC for memory spaces SP that are created based on requests r (e.g., create requests) received at that given control circuit CC. In FIGS. 3D, 3E, and 3F, memory-space identifiers ID are shaded to indicate for which memory-space identifiers ID the corresponding control circuit CC is serving as a local (or home) control circuit CC. In some embodiments, the memory-space identifiers ID (e.g., logical memory device IDs) in a given memory map M associated with a local control circuit CC may be identified by a column in a table of the memory map M. In FIG. 3D, rows R1 to R5 indicate that a control circuit CC (e.g., zeroth control circuit CC0), which includes a zeroth memory map M0, may serve as a home control circuit CC for memory-space identifiers ID 0, ID 1, and ID 2. The memory-space identifiers ID 0, ID 1, ID 2, ID 3, ID 4, and ID 5 may respectively correspond to memory spaces SP0, SP1, SP2, SP3, SP4, and SP5 of FIG. 3G. The unshaded rows (e.g., R6 in FIG. 3D) indicate for which memory-space identifiers ID the corresponding control circuit CC is serving as a donor (or remote) control circuit CC. In some embodiments, the memory-space identifiers ID in a given memory map M associated with a remote control circuit CC may be identified by a column in a table of the memory map M. For example, the zeroth control circuit CC0, which includes the zeroth memory map M0, may serve as a donor control circuit CC for the memory-space identifier ID 5 (e.g., SP5 of FIG. 3G). Memory-space identifier ID 5 may be a local memory space SP of a second control circuit CC2, which includes a second memory map M2 (see FIG. 3F).

FIG. 3E is a diagram depicting a first memory map M1, which may correspond to a first memory zone MZ1, according to some embodiments of the present disclosure.

Referring to FIG. 3E, the information in a first memory map M1, for locating memory segments SEG associated with one or more memory spaces SP provides an example wherein a first control circuit CC1, associated with the first memory map M1, serves as a home control circuit CC for different memory spaces SP from the zeroth control circuit CCO associated with the zeroth memory map M0. For example, the shaded portions of rows R3 to R5 indicate that the first control circuit CC1 may serve as a home control circuit CC for memory-space identifiers ID 3 and ID 4.

FIG. 3F is a diagram depicting a second memory map M2, which may correspond to a second memory zone MZ2, according to some embodiments of the present disclosure.

Referring to FIG. 3F, the information in a second memory map M2, for locating memory segments SEG associated with one or more memory spaces SP provides an example wherein a second control circuit CC2, associated with the second memory map M2, serves as a home control circuit CC for different memory spaces SP than both the zeroth control circuit CCO and the first control circuit CC1 respectively associated with the zeroth memory map M0 and the first memory map M1. For example, the shaded portions of rows R3 to R5 indicate that the second control circuit CC2 serves as a home control circuit CC for memory-space identifier ID 5.

Referring to FIG. 3G, the zeroth control circuit CCO may serve as the home control circuit CC for three logical devices-a zeroth memory space SP0, a first memory space SP1, and a second memory space SP2. The zeroth memory space SP0 may include a zeroth segment SEGO, of the zeroth memory zone MZ0, corresponding to the starting address SA of A and the ending address EA of B. The first memory space SP1 may span across two memory zones MZ-the first memory zone MZ1 and the second memory zone MZ2. The zeroth memory zone MZ0 may be a requester (e.g., a requesting) zone. The first memory zone MZ1 and the second memory zone MZ2 may be donors. For example, the first memory zone MZ1 may donate a zeroth segment SEGO, of the first memory zone MZ1, corresponding to the starting address SA of C and the ending address EA of D. The second memory zone MZ2 may donate a zeroth segment SEGO, of the second memory zone MZ2, corresponding to the starting address SA of E and the ending address EA of F. The second memory space SP2 may span across two memory zones-the zeroth memory zone MZ0 and the first memory zone MZ1. The zeroth memory zone MZ0 may provide a first segment SEG1, of the zeroth memory zone MZ0, corresponding to the starting address SA of G and to the ending address EA of H, to the second memory space SP2. The first memory zone MZ1 may donate a first segment SEG1, of the first memory zone MZ1, corresponding to the starting address SA of I and the ending address EA of J, to the second memory space SP2.

The first control circuit CC1 may serve as the home control circuit CC for two logical devices-a third memory space SP3 and a fourth memory space SP4. The third memory space SP3 may include a second segment SEG2, of the first memory zone MZ1, corresponding to the starting address SA of K and the ending address EA of L. The fourth memory space SP4 may span across the first memory zone MZ1 and the second memory zone MZ2. The fourth memory space SP4 may include a third segment SEG3, of the first memory zone MZ1, corresponding to the starting address SA of M and the ending address EA of N. The fourth memory space SP4 may further include a first segment SEG1, of the second memory zone MZ2, corresponding to the starting address SA of O and the ending address EA of P.

The second control circuit CC2 may serve as the home control circuit CC for one logical device-a fifth memory space SP5. The fifth memory space SP5 may span across three memory zones MZ-the zeroth memory zone MZ0, the first memory zone MZ1, and the second memory zone MZ2. The fifth memory space SP5 may include a second segment SEG2, of the second memory zone MZ2, corresponding to the starting address SA of Q and the ending address EA of R. The zeroth memory zone MZ0 may donate a second segment SEG2, of the zeroth memory zone MZ0, corresponding to the starting address SA of S and the ending address EA of T, to the fifth memory space SP5. The first memory zone MZ1 may donate a fourth segment SEG4, of the first memory zone MZ1, corresponding to the starting address SA of U and the ending address EA of V, to the fifth memory space SP5.

FIG. 4 is a diagram depicting a scattered linear memory space associated with contiguous memory regions MR, according to some embodiments of the present disclosure.

Referring to FIG. 4, in some embodiments, from a physical perspective, each memory zone MZ may include multiple channels and each channel may include a plurality of memory chips. However, the present disclosure is not limited thereto and the memory zones MZ may include any suitable memory types and/or architectures known to one of skill in the art.

Each memory zone MZ may be presented in a linear address space (e.g., a non-contiguous linear address space). As discussed above, a linear address space of a memory controller within a given memory zone MZ may be referred to as a memory region MR. Each memory zone MZ may include one or more memory regions MR. A memory space SP (e.g., a logical device) may be created from one or more memory regions MR.

For example, a memory device MD may be accessed by two hosts 100 (e.g., the first host 100a and a second host 100b). Each host 100 may create a single logical memory space SP (e.g., SPa and SPb) from the memory device MD. An operating system of each host 100 (e.g., the first host 100a and the second host 100b) may perceive three NUMA nodes. The three NUMA nodes may include first NUMA node for DDR memory of a given host 100 that is local to a CPU associated with the given host 100 (e.g., the first host 100a) in a server, a second NUMA node for DDR memory of the other host 100 (e.g., the second host 100b) that is local to the CPU of the other host 100 in the server, and a third NUMA node for a memory space SP (e.g., a CXL logical device) created from the memory device MD.

In some embodiments, four memory devices MD may be combined to create a larger memory device (e.g., a super memory device) connected by an on-chip interconnect and including 4 memory pools 300. Each control circuit CC may include: one or more core cluster of one or more control cores C, one or more host interfaces IF including one or more ports (e.g., CXL 2.0 ports), one or more memory controllers X (e.g., DDR5 memory controllers), and one or more memory maps M. For example, in some embodiments, a given control circuit CC may include: one core cluster including eight control cores C (e.g., C1 through C8), one host interface IF including eight ports, four memory controllers X, and one memory map M. Each memory space SP may be created, at least partially, in its local memory zone MZ and registered to its memory map M. Each memory pool 300 may include four memory zones MZ. One or more (e.g., all) memory zones MZ may be homogeneous. Each memory zone MZ may have 4-channel interleaved DDR5 SDRAM dual in-line memory modules (DIMMs). In such embodiments, there may be only one memory region MR in each memory zone MZ. However, the present disclosure is not limited thereto and may include more than one memory region MR in each memory zone MZ.

Referring still to FIG. 4, the memory device MD (see FIG. 1) may include a linear memory space (e.g., a "huge" linear address space) that is visible to hosts 100 (e.g., to the first host 100a and to the second host 100b). In some embodiments, the entire memory device MD may include 128 terabytes (TB) and, as such, may be referred to as a huge LMS. The linear memory space of the memory device MD may include multiple memory zones MZ (e.g., MZ0 to MZn) that are local to the memory device MD. For example, each memory zone MZ may provide 32 TB of the total of 128 TB. Each memory zone MZ may include its own linear memory space. For example, each memory zone MZ may include a linear address space associated with a corresponding control circuit CC. Each memory zone MZ may have a different base address than each other memory zone MZ. Each memory zone MZ may include one or more memory regions MR (e.g., MR1, MR2, MR3, and MR4). For example, each memory region MR may provide 8 TB of the total 32 TB of a corresponding MZ. Each memory region MR may include its own linear memory space. For example, each memory region MR may include a linear address space associated with a corresponding memory controller X. Memory regions MR of different memory zones MZ may have the same address. A memory segment SEG may be a chunk of memory, allocated for a given memory space SP, from a given memory region MR. For example, memory region MR1 is depicted as including four memory segments, including a SEGO, SEG1, SEG2, and SEG3. Memory segments SEGO and SEG2 may be allocated to the first host 100a. Memory segments SEG1 and SEG3 may be allocated to the second host 100b. In some embodiments, a memory region MR may correspond to a channel and a rank of memory chips in a DIMM. For example, a given memory region MR may be a logical region corresponding to the channel and the rank of the memory chips in the DIMM. Because memory zones MZ may cooperatively contribute memory units MU to satisfy a given create request, the memory within each memory zone MZ may be scattered (e.g., non-contiguous), even though the memory regions MR within a memory zone MZ may be contiguous.

As depicted in the key at the bottom of FIG. 4, memory segments SEG for the first host 100a are depicted by blocks having diagonal lines. Memory segments SEG for the second host 100b are depicted by blocks having horizontal lines. Portions of memory that are available (e.g., free or unoccupied memory portions) are indicated with no hatching pattern. In some embodiments, the physical memory addresses associated with the memory regions MR of a given memory zone MZ (e.g., MZ0) may include a linear address space, while the memory segments SEG, allocated to any given memory space SP, may be scattered.

FIG. 5 is a flowchart depicting operations of a method for creating a logical memory space SP, according to some embodiments of the present disclosure.

As discussed above, the memory device controller 200 (see FIGS. 1 and 2) may allocate (e.g., may provision) memory segments SEG for requested memory spaces SP (e.g., for logical memory spaces), based on requests r received at host interfaces IF from one or more hosts 100.

Referring to FIG. 5, a method 5000 may include one or more of the following operations. A controller core C (e.g., a home controller core) of a first control circuit CC1 (e.g., a home control circuit) may receive a create request r1a, from a host 100, via a port of a host interface IF of the first control circuit CC1 (operation 5001). For example, the home controller core C may be a controller core C that is dedicated to (e.g., that is assigned to handle requests from) the port that receives the create request r1a. The control circuit CC that receives the create request r1a may be referred to as the home control circuit CC. The first controller core C1 may determine whether the first memory zone MZ1 (serving as the home zone) is able to create the requested memory space SP as a whole (operation 5002). For example, the first controller core C1 may determine whether the first memory zone MZ1 has enough available memory units MU to satisfy the create request r1a. If the first memory zone MZ1 has enough available memory units MU to satisfy the create request (Y), then the home control circuit CC (e.g., by way of the first controller core C1) may allocate available memory portions (e.g., free memory portions or unoccupied memory portions) of the first memory zone MZ1 to the memory space SP, as memory segments SEG, by updating the memory map M of the first control circuit CC1 to register (e.g., to record) the memory segments SEG and their properties (operation 5003). The first controller core C1 may, first, try to allocate memory units MU from its local memory zone MZ (e.g., the home zone) because the local memory zone MZ (e.g., the first memory zone MZ1) may provide the shortest path (e.g., lowest latency) between the host 100 and the memory units MU. If the first memory zone MZ1 does not have enough available memory units MU to satisfy the create request (N), then the first controller core C1 may determine (e.g., may begin determining) whether the memory space SP may be created through cooperation with one or more other memory zones MZ (operation 5004). For example, the first memory zone MZ1 may not have enough memory available due to memory units MU being occupied by other memory spaces SP and/or due to not having sufficient capacity for the requested memory space SP.

The controller core C of the home zone may request memory donations from one or more remote (e.g., one or more neighboring) controller cores C of other memory zones MZ by sending a request r (e.g., a memory-availability request) via the interconnect ICT (operation 5005). One or more of the remote controller cores C may send memory-availability information to the home controller core C (e.g., to the first controller core C1, which may be the requesting controller core C) (operation 5006). Based on the memory-availability information from the one or more remote controller cores C, the home controller core C may determine whether there is enough memory available to complete (e.g., to satisfy) the create request r1a (operation 5007). If there is not enough memory available to complete the create request r1a (N), then the home controller core C may return an error to the requesting host 100 (operation 5008). If there is enough memory available to complete the create request r1a (Y), then the home controller core C may determine which remote controller cores C will participate as donors by sending a donor request (e.g., a memory-donation request) (e.g., r1c) to the remote controller cores C having available memory (operation 5009).

The serving controller cores (e.g., the selected donor controller cores) (e.g., a controller core C of one or more of the second control circuit CC2, the third control circuit CC3, and/or the fourth control circuit CC4) may update their corresponding memory maps M to register memory segments SEG (and their properties) for the requested memory space SP (operation 5010). The home controller core (e.g., the first controller core C1) may update its corresponding memory map M to register its memory segments SEG (and their properties) and the memory segments SEG from all donor memory zones MZ (and their properties) for the memory space SP (operation 5003). The home controller core C may determine whether all memory segments SEG have been successfully created (e.g., successfully registered or successfully reserved) (operation 5011). For example, all of the memory zones MZ may send an acknowledgement (e.g., a notification) when their respective donated memory segments SEG have been registered with their corresponding memory maps M. If all memory segments SEG have been successfully created (Y), then the home controller core C may commit the registration of the memory segments SEG to all involved memory zones MZ (operation 5012). For example, the home controller core C may update its home memory map M with the memory-segment information for the memory segments SEG from the home memory zone MZ and the memory segments SEG from any donor memory zones MZ. The home controller core C may return address information A (e.g., a starting address SA) of the memory space SP to the requesting host 100 via the corresponding port of the host 100 at the host interface IF (operation 5013). If not all memory segments are successfully created (N), the home controller core C may revert the registration to all involved memory zones MZ (operation 5014).

Thus, the home controller core C (with cooperation from donor controller cores C) can create a memory space SP using multiple memory segments SEG provisioned from different memory zones MZ. All memory segments SEG may be registered to the local memory map M of the home controller core C while the remote (e.g., neighboring) control circuits CC register the memory segments that they provide to their local memory maps M. Once a memory space SP is created, the host 100 can access the corresponding memory using load operations (e.g., read operations) and store operations (e.g., write operations).

FIG. 6 is a flowchart depicting operations of a method for performing a load request, according to some embodiments of the present disclosure.

Referring to FIG. 6, a method 6000 may include one or more of the following operations. A controller core C (e.g., a home controller core) of a first control circuit (e.g., the first control circuit CC1) may receive a request r (e.g., a load request, which is also referred to as a read request), from a host 100, via a port of a host interface IF of the first control circuit CC1 (operation 6001). For example, the home controller C may be dedicated to (e.g., may be assigned to) serve requests received at the port associated with the load request. The home controller core C may determine, based on checking the local memory map M, whether an address for (e.g., associated with) the load request belongs to the local memory zone MZ of the home controller core (e.g., the home memory zone MZ) (operation 6002). If the address belongs to the home controller core's local memory zone (Y), then the home controller core C may send a memory load request to a memory controller X, of the home memory zone MZ (e.g., the first memory zone MZ1), that manages the address (operation 6003). For example, the home controller core may convert the address of the memory space SP associated with the load request to a device linear address (e.g., to a linear address associated with the memory device MD as a whole). For example, the device linear address may correspond to linear addresses of the entire memory device MD, which may include more than one memory space SP. That is, an address within one memory space SP may be different from its corresponding address in relation to all other addresses within the memory device MD. The memory controller X (e.g., the local memory controller X) may load data for the load request from the local memory zone MZ and return the data to the home controller core C (operation 6004). The home controller core C may return the loaded data to the requesting host 100 via the port of the host interface IF of the first control circuit CC1 (operation 6005).

If the address does not belong to local memory zone MZ of the home controller core (N), then the home controller core C may send (e.g., may forward), via an interconnect ICT, the load request to the remote (e.g., a neighboring) controller core C of the remote memory zone MZ that manages the address (e.g., the second memory zone MZ2) (operation 6006). The remote controller core C may load data, associated with the address, from its memory zone MZ (e.g., via a remote memory controller X) and may return the data to the home controller core C via the interconnect ICT (operation 6007). The home controller core C may determine whether the remote load performed by one or more remote controller cores C is done (operation 6008). If the remote load is done (Y), the home controller core C may return the loaded data to the requesting host 100 via the port of the host interface IF of the first control circuit CC1 (operation 6005). If the remote load is not done (e.g., after a time threshold) the home controller core C may return an error to the requesting host 100 (operation 6009).

FIG. 7 is a flowchart depicting operations of a method for performing a store request, according to some embodiments of the present disclosure.

Referring to FIG. 7, a method 7000 may include one or more of the following operations. A controller core C (e.g., a home controller core C) of the first control circuit CC1 may receive a store request (e.g., a write request), from the host 100, via a port of the host interface IF of the first control circuit CC1 (operation 7001). For example, the home controller C may be dedicated to (e.g., may be assigned to) serve requests received at the port associated with the store request. The home controller core C may determine, based on checking the local memory map M, whether an address for (e.g., associated with) the store request belongs to the local memory zone of the home controller core C (e.g., the home memory zone MZ) (operation 7002). If the address belongs to the local memory zone MZ of the home controller core (e.g., if the address is valid in the memory space SP) (Y), then the home controller core C may send a memory store request to a memory controller X, of the home memory zone MZ, that manages the address (operation 7003). For example, the home controller core C may convert the address of the memory space SP to a device linear address. The memory controller X (e.g., the local memory controller X) may store data for the store request to the local memory zone MZ (operation 7004). The home controller core C may return an acknowledgment (e.g., a notification) to the requesting host 100 via the port of the host interface IF, based on completing the store operation (operation 7005).

If the address does not belong to the local memory zone MZ of the home controller core (N), then the home controller core C may send (e.g., may forward), via an interconnect ICT, the store request to the remote (e.g., a neighboring) controller core C of the remote memory zone MZ that manages the address (operation 7006). The remote controller core C may store data, associated with the address, to its memory zone MZ (operation 7007). The remote controller core C may send an acknowledgement that the store operation is complete (operation 7008). The home controller core C and the remote controller cores C may assume that write ordering is preserved, such that the data may be returned to the requesting host 100 in the proper order (operation 7009). The home controller core C may return an acknowledgement to the requesting host 100 via the port of the host interface IF, indicating that the store operation is complete (operation 7005).

FIG. 8 is a flowchart depicting operations of a method for memory pool management, according to some embodiments of the present disclosure.

Referring to FIG. 8, the method 8000 may include one or more of the following operations. A first control circuit CC1 (see FIG. 2) may receive a first request r1a (e.g., a first create request) to create a memory space SP (e.g., a logical memory space) (operation 8001). The first control circuit CC1 may be associated with (e.g., communicatively coupled to) a first memory zone MZ1. Based on determining that a first memory unit MU1 (e.g., a first logical memory unit) of the first memory zone MZ1 is available, the first control circuit CC1 may allocate the first memory MU1 (e.g., the first logical memory unit) to the memory space SP (operation 8002). Based on determining that a second memory unit MU2 of the first memory zone MZ1 is occupied, the first control circuit CC1 may send a first donation request r1c (e.g., a memory-donation request) to a second control circuit CC2 associated with a second memory zone MZ2 (operation 8003). The second memory zone MZ2 may comprise physical addresses that are non-contiguous with physical addresses of the first memory zone MZ1. The second memory zone MZ2 may comprise memory-unit types that are different from (or that are the same as) memory-unit types of the first memory zone MZ1. Based on determining that a third memory unit MU3 of the second memory zone MZ2 is available, the second control circuit CC2 may allocate the third memory unit MU3 to the memory space SP (operation 8004).

Accordingly, aspects of some embodiments of the present disclosure may provide improvements to memory pool management by providing a cooperative modular design for flexibly fulfilling requests for large memory spaces with reduced latency in a scalable system.

Example embodiments of the disclosure may extend to the following statements, without limitation:
Statement 1. An example method includes: receiving, by a first control circuit of a memory device controller, a first request to create a first logical memory space, the first control circuit being associated with a first memory zone, based on determining, by the first control circuit, that a first memory unit, at a first physical address range of the first memory zone is available, allocating, by the first control circuit, the first memory unit to the first logical memory space, based on determining, by the first control circuit, that a second memory unit of the first memory zone is occupied, sending, by the first control circuit, a memory-donation request to a second control circuit of the memory device controller, the second control circuit being associated with a second memory zone, and based on determining, by the second control circuit, that a third memory unit of the second memory zone is available, allocating, by the second control circuit, the third memory unit to the first logical memory space.
Statement 2. An example method includes the method of statement 1, wherein the determining that the first memory unit is available includes reading, by a memory-map manager of the first control circuit, a first memory map associated with the first memory zone, and the determining that the third memory unit is available includes reading, by a memory-map manager of the second control circuit, a second memory map associated with the second memory zone.
Statement 3. An example method includes the method of any of statements 1 and 2, wherein the determining that the second memory unit is occupied includes reading, by a memory-map manager of the first control circuit, the first memory map associated with the first memory zone.
Statement 4. An example method includes the method of any of statements 1-3, wherein the first request to create the first logical memory space is associated with a performance target.
Statement 5. An example method includes the method of any of statements 1-4, and further includes determining, by the first control circuit, that the first memory unit includes a characteristic associated with providing the performance target, and determining, by the second control circuit, that the third memory unit includes the characteristic associated with providing the performance target.
Statement 6. An example method includes the method of any of statements 1-5, wherein the first memory unit includes a first memory type, and the third memory unit includes a second memory type that is different from the first memory type.
Statement 7. An example method includes the method of any of statements 1-6, wherein the first control circuit includes a first control core and a second control core, the first request to create the first logical memory space is processed by the first control core, and a second request to create a second logical memory space is processed by the second control core.
Statement 8. An example method includes the method of any of statements 1-7, wherein the allocating of the first memory unit to the first logical memory space includes updating, by a first control core of the first control circuit, a first memory map of the first control circuit with a property of the first memory unit.
Statement 9. An example method includes the method of any of statements 1-8, wherein the allocating of the third memory unit to the first logical memory space includes updating, by a second control core of the second control circuit, a second memory map of the second control circuit with a property of the third memory unit.
Statement 10. An example method includes the method of any of statements 1-9, wherein the third memory unit corresponds to a third physical address range that is separated from the first physical address range.
Statement 11. An example method includes the method of any of statements 1-10, and further includes receiving, by the first control circuit, a read request for a data location associated with the first logical memory space, determining, by the first control circuit, that the data location is located outside of the first memory zone, forwarding, by the first control circuit, the read request to the second control circuit, and reading, by a memory controller of the second control circuit, data associated with the read request from the second memory zone.
Statement 12. An example method includes the method of any of statements 1-11, and further includes receiving, by the first control circuit, a write request for a data location associated with the first logical memory space, determining, by the first control circuit, that the data location is located outside of the first memory zone, forwarding, by the first control circuit, the write request to the second control circuit, and writing, by a memory controller of the second control circuit, data associated with the write request to the second memory zone.
Statement 13. An example system for performing the method of any of statements 1-12 includes a memory device controller including a first control circuit and a second control circuit, a first memory zone including a first memory unit associated with the first control circuit and a second memory unit associated with the first control circuit, and a second memory zone including a third memory unit associated with the second control circuit.
Statement 14. An example device for performing the method of any of statements 1-12 includes a processing circuit associated with a first control circuit and a second control circuit, and a computer-readable medium storing instructions that, based on being executed by the processing circuit, cause the processing circuit to perform the method of any of statements 1-12.

While embodiments of the present disclosure have been particularly shown and described with reference to the embodiments described herein, it will be understood by those of ordinary skill in the art that various changes in form and details may be made therein without departing from the scope of the present disclosure as set forth in the following claims.

## Claims

1. A method for memory pool management, the method comprising:
receiving, by a first control circuit of a memory device controller, a first request to create a first logical memory space, the first control circuit being associated with a first memory zone;
based on determining, by the first control circuit, that a first memory unit, at a first physical address range of the first memory zone is available, allocating, by the first control circuit, the first memory unit to the first logical memory space;
based on determining, by the first control circuit, that a second memory unit of the first memory zone is occupied, sending, by the first control circuit, a memory-donation request to a second control circuit of the memory device controller, the second control circuit being associated with a second memory zone; and
based on determining, by the second control circuit, that a third memory unit of the second memory zone is available, allocating, by the second control circuit, the third memory unit to the first logical memory space.

2. The method of claim 1, wherein:
the determining that the first memory unit is available comprises reading, by a memory-map manager of the first control circuit, a first memory map associated with the first memory zone; and
the determining that the third memory unit is available comprises reading, by a memory-map manager of the second control circuit, a second memory map associated with the second memory zone.

3. The method of claim 1, wherein the determining that the second memory unit is occupied comprises reading, by a memory-map manager of the first control circuit, a first memory map associated with the first memory zone.

4. The method of any one of claims 1 to 3, wherein the first request to create the first logical memory space is associated with a performance target.

5. The method of claim 4, further comprising:
determining, by the first control circuit, that the first memory unit comprises a characteristic associated with providing the performance target; and
determining, by the second control circuit, that the third memory unit comprises the characteristic associated with providing the performance target.

6. The method of any one of claims 1 to 5, wherein:
the first memory unit comprises a first memory type; and
the third memory unit comprises a second memory type that is different from the first memory type.

7. The method of any one of claims 1 to 6, wherein:
the first control circuit comprises a first control core and a second control core;
the first request to create the first logical memory space is processed by the first control core; and
a second request to create a second logical memory space is processed by the second control core.

8. The method of claim 1, wherein the allocating of the first memory unit to the first logical memory space comprises updating, by a first control core of the first control circuit, a first memory map of the first control circuit with a property of the first memory unit.

9. The method of claim 1 or 8, wherein the allocating of the third memory unit to the first logical memory space comprises updating, by a second control core of the second control circuit, a second memory map of the second control circuit with a property of the third memory unit.

10. The method of any one of claims 1 to 9, wherein the third memory unit corresponds to a second physical address range that is separated from the first physical address range.

11. The method of any one of claims 1 to 10, further comprising:
receiving, by the first control circuit, a read request for a data location associated with the first logical memory space;
determining, by the first control circuit, that the data location is located outside of the first memory zone;
forwarding, by the first control circuit, the read request to the second control circuit; and
reading, by a memory controller of the second control circuit, data associated with the read request from the second memory zone.

12. The method of any one of claims 1 to 10, further comprising:
receiving, by the first control circuit, a write request for a data location associated with the first logical memory space;
determining, by the first control circuit, that the data location is located outside of the first memory zone;
forwarding, by the first control circuit, the write request to the second control circuit; and
writing, by a memory controller of the second control circuit, data associated with the write request to the second memory zone.

13. A system comprising:
a memory device controller comprising a first control circuit and a second control circuit;
a first memory zone comprising a first memory unit associated with the first control circuit and a second memory unit associated with the first control circuit; and
a second memory zone comprising a third memory unit associated with the second control circuit.

14. The system of claim 13, wherein the third memory unit corresponds to a second physical address range that is separated from a first physical address range corresponding to the first memory unit.

15. The system of claim 13 or 14, wherein:
the first memory unit comprises a first memory type; and
the third memory unit comprises a second memory type that is different from the first memory type.
